# EUROPÄISCHE PATENTSCHRIFT

(11) **EP 0 535 181 B1**
(45) Veröffentlichungstag und Bekanntmachung des Hinweises auf die Patenterteilung: **20.11.1996**
(21) Anmeldenummer: 92906014.3
(22) Anmeldetag: 19.03.1992
(51) Int. Cl.: H02K 24/00

(54) **RESOLVER**
RESOLVER
RESOLVEUR

(30) Priorität: 22.03.1991 CH 884/91
(43) Veröffentlichungstag der Anmeldung: 07.04.1993
(73) Patentinhaber: Admotec Precision AG, 8700 Küsnacht (CH)
(72) Erfinder: WYSS, Walter, CH-8704 Herrliberg (CH)
(74) Vertreter: Troesch Scheidegger Werner AG
(86) Internationale Anmeldenummer: CH9200056
(87) Internationale Veröffentlichungsnummer: WO9216994

(56) Entgegenhaltungen:
- EP-A- 0 174 290
- DE-C- 706 703
- US-A- 3 398 386
- US-A- 4 962 331

## Beschreibung

Die vorliegende Erfindung betrifft einen Resolver zur Messung bzw. Erfassung von Winkelstellungen bzw. Umdrehungen einer Welle unter Ausnutzung eines induzierten Magnetfeldes zwischen einem Stator und einem mit der Welle verbundenen bzw. verbindbaren, zusammen Teile des Resolvers bildenden Rotor, wobei lediglich der Stator mit einer Erregerwicklung und einer Messspule bewickelt ist, der Rotor am Umfang mit Polflächen unterschiedlicher Polarität versehen ist, welche mit den Statorwicklungen zusammenwirken, wobei die Polflächen derart ausgebildet sind, dass in jeder Winkelstellung des Rotors eine für diese Stellung spezifische Magnetflussverteilung besteht, und der Rotor als hohlzylindrischer Grundkörper aus nichtmagnetischem Material ausgebildet ist, in dessen Aussenmantel ein parallel zu einer zur Rotorlängsachse schief stehenden Ebene umlaufender Ring aus magnetischem Material vorgesehen ist, welcher die Polflächen unterschiedlicher Polarität aufweist.

Derartige Vorrichtungen sind im Prinzip Sensoren, welche Winkel oder Umdrehungen unter Benutzung des induktiven Prinzipes messen.

Resolver der vorstehend beschriebenen Art sind z.B. bekannt aus EP-A-0 174 290.

Obwohl bei dieser bekannten Vorrichtung der magnetische Ring auf einigermassen praktische Art und Weise auf dem Grundkörper befestigt werden konnte, entsteht bei doch erheblichem Aufwand und hohen Herstellungskosten ein nicht mit Sicherheit hochpräziser Resolver.

Aufgabe der vorliegenden Erfindung war es, einen Resolver noch einfacher aufzubauen, so dass die Herstellungskosten weiter gesenkt werden können und zudem eine grössere Modellvielfalt mit wenig Aufwand zur Verfügung gestellt werden kann. Dabei soll selbstverständlich die Genauigkeit für Messungen optimal ausfallen.

Resolver werden insbesondere bei der Industrieautomatisierung für Bewegungskontrollen eingesetzt.

Die gestellte Aufgabe wird bei einem erfindungsgemäss ausgebildeten Resolver durch die Merkmale gemäss dem kennzeichnenden Teil von Anspruch 1 gelöst.

Besonders bevorzugte Ausführungsformen des erfindungsgemässen Resolvers sind in den abhängigen Ansprüchen definiert.

Ebenfalls Gegenstand der Erfindung ist ein Verfahren zur Herstellung des erfindungsgemässen Resolvers, welches sich durch die Merkmale des kennzeichnenden Teils von Anspruch 4 auszeichnet.

Die Erfindung wird nachstehend anhand von in der Zeichnung dargestellten Ausführungsbeispielen noch etwas näher erläutert. Es zeigt:
Fig. 1 den prinzipiellen Aufbau eines Resolvers gemäß Stand der Technik, teilweise im Schnitt;
Fig. 2 eine besonders bevorzugte Ausführungsform eines Rotors, im Schnitt, für einen erfindungsgemässen Resolver;
Fig. 3 einen Schnitt durch einen mit dem Rotor nach Fig. 2 ausgerüsteten Resolver, und
Fig. 4 eine rein schematische Darstellung der gewellten, schiefen Flächen der Halteringe des Magnetringpaketes.

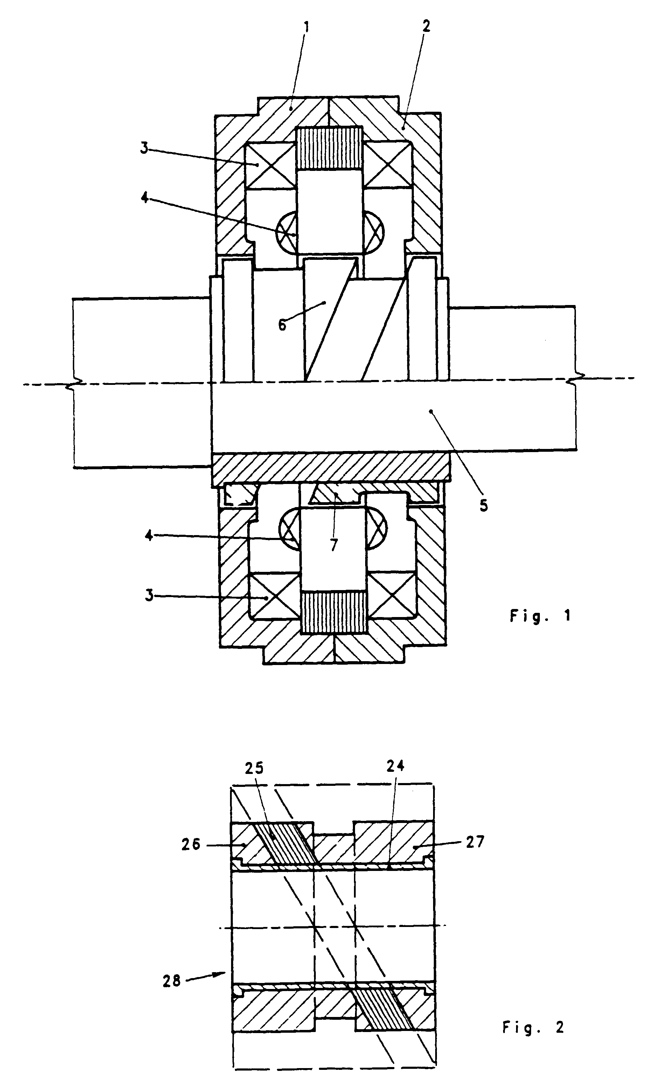

Der in Fig. 1 schematisch dargestellte Resolver besteht aus einem Stator 1, 2, welcher die Erregerwicklung 3 und die Messwicklung 4 trägt. In einem Axialdurchgang des Stators ist der Rotor 5 angeordnet, welcher keine Wicklungen trägt. Am Umfang des wirksamen Teils des Rotors sind Erhebungen vorgesehen, welche magnetisch unterschiedliche Polflächen N und S darstellen. Diese Polflächen 6, 7 sind derart ausgebildet, dass sie in jeder Winkelstellung des Rotors 5 eine für diese Stellung spezifische Reluktanz aufweisen. Diese variable Reluktanz kann durch sich stetig verändernde Polflächen (flächenmässig) erzielt werden oder gegebenenfalls durch verschiedene Dicken der Erhebungen, was zu unterschiedlichen Spalthöhen zwischen den wirksamen Polflächen des Rotors und dem Stator führt.

Dank diesem einfach aufgebauten Resolver sind ausserordentlich genaue Messungen möglich, welche die genaue Erfassung der Winkelstellung des Rotors über 360° erlauben.

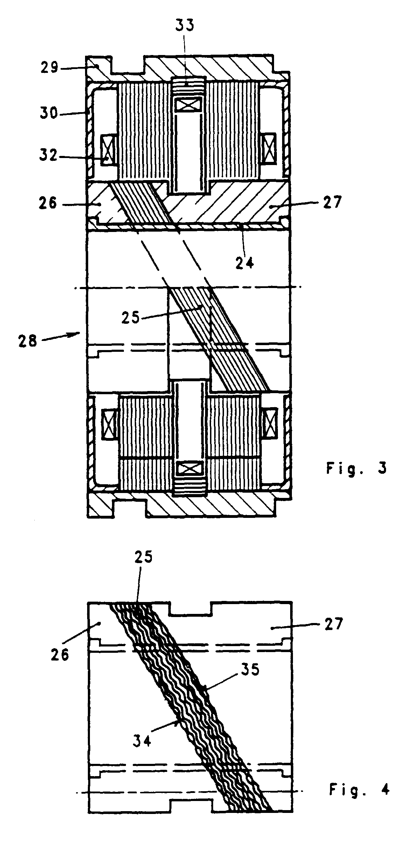

Fig. 2 und 3 zeigen eine Ausführungsform eines erfindungsgemässen Rotors 28 (Fig. 2) bzw. eines damit ausgerüsteten Resolvers (Fig. 3).

Bei dieser Ausführungsform ist der Aufbau und insbesondere die Herstellung des Rotors 28 besonders einfach: Der Rotor 28 besteht aus einer inneren zylindrischen Hülse 24 aus nichtmagnetischem Material, auf deren Aussenmantel ein Magnetring 25, bestehend aus einer Vielzahl von einzelnen Ringen, welche direkt aufeinanderliegen, angeordnet ist. Dieser Magnetring 25 verläuft parallel zu einer bezüglich der Rotorachse schief liegenden Ebene. Der Magnetring 25 ist beidseitig von je einem zylindrischen Ring 26 bzw. 27 zusammengehalten, dessen aussenliegende Stirnflächen durch Aufbördelungen der inneren Hülse gehalten sind (nachdem alle Teile gegeneinander gepresst sind).

Die innenliegenden Stirnflächen der Ringe 26,27, ebenfalls aus nichtmagnetischem Material, verlaufen ebenfalls schief und parallel zur genannten Ebene, so dass der Magnetring 25 zwischen den Ringen 26,27 gefangen ist.

Aus. Fig. 2 geht hervor, wie der Rotor 28 zuerst als Rohrform mit grösserem Durchmesser gebildet wird (punktierte Aussenkontur), um danach auf die definitive Form angedreht zu werden.

Dank dieser Bauart können auf der Basis eines Grundkörpers (Rohform) Rotoren mit verschiedenen Durchmessern auf einfache Weise hergestellt werden.

Wenn beim Resolver (Fig. 3) ein Magnetjoch 33 gebildet wird, entstehen keine magnetischen Störungen der Wicklungen (Messgenauigkeit!).

Die in Fig. 3 gezeigte Bauform des Resolvers kann als sog. vollgeblechte Konstruktion ausgebildet sein, wobei insbesondere das Joch 33 aus gespaltenem Material (z.B. Blechspirale) zusammen mit der übrigen vollgeblechten Konstruktion verantwortlich für ein hohes (starkes) Ausgangssignal.ist.

Wie bereits erwähnt, erlaubt der Aufbau des Rotors 28 nach Fig. 2 eine einfache und präzise Herstellung (mit in weiten Bereich wählbarer Rotordurchmessern).

Wie Fig. 4 zeigt, werden vorzugsweise die innenliegenden Schrägflächen der zylindrischen Halteringe 26,27, zwischen denen das Magnetringpaket 25 festgehalten ist, in Längsrichtung der Flächen leicht gewellt (Wellenlinien bzw. Schrägflächen 34,35 in Fig. 4), was überraschenderweise wesentlich zur Genauigkeit des Signals führt. Es genügt dabei, die Schrägflächen in Richtung der Längsachsen der Flächen mit einem Fräser zu bearbeiten. Die durch die präzise Bearbeitung entstehenden Wellen weisen eine geringe Höhe(Grössenordnung wenige µ bis wenige Zehntelmillimeter) auf, um dieser Absicht zu genügen.

Durch Zusammenpressen des Magnetringpaketes 25 durch die zylindrischen Ringe 26,27 wird das Paket derart verformt, dass dieses gesamthaft den Wellen jeweils an den Kontaktflächen mit den Ringen 26,27 folgt und gegen die Paketmitte hin praktisch eben bleibt (die einzelnen Magnetringe).

## Patentansprüche

1. Resolver zur Messung bzw. Erfassung von Winkelstellungen bzw. Umdrehungen einer Welle unter Ausnutzung eines induzierten Magnetfeldes zwischen einem Stator (29) und einem mit der Welle verbundenen bzw. verbindbaren, zusammen Teile des Resolvers bildenden Rotor (28), wobei lediglich der Stator (29) mit einer Erregerwicklung und einer Messspule bewickelt ist, der Rotor (28) am Umfang mit Polflächen unterschiedlicher Polarität versehen ist, welche mit den Statorwicklungen zusammenwirken, wobei die Polflächen derart ausgebildet sind, dass in jeder Winkelstellung des Rotors (28) eine für diese Stellung spezifische Magnetflussverteilung besteht, und der Rotor (28) als hohlzylindrischer Grundkörper aus nichtmagnetischem Material ausgebildet ist, in dessen Aussenmantel ein parallel zu einer zur Rotorlängsachse schief stehenden Ebene umlaufender Ring (25) aus magnetischem Material vorgesehen ist, welcher die Polflächen unterschiedlicher Polarität aufweist, dadurch gekennzeichnet, dass der hohlzylindrische Rotorgrundkörper (28) aus einer inneren zylindrischen Hülse (24) besteht, auf deren Mantelfläche zwei zylindrische Körper (26, 27) aus nicht magnetischem Material im Abstand zueinander aufgesetzt sind, deren aussenliegende Stirnflächen etwa bündig mit den Stirnflächen der zylindrischen Hülse (24) verlaufen, während die sich gegenüberliegenden innenliegenden Stirnflächen (34,35) in einem schiefen Winkel parallel zur bezüglich der Rotorlängsachse schief stehenden Ebene verlaufen und dabei den Ring (25) aus magnetischem Material zwischen sich einschliessen und festhalten.

2. Resolver nach Anspruch 1, dadurch gekennzeichnet, dass die innere zylindrische Hülse an den Stirnenden aufgebördelt ist, um so die übrigen Teile des Rotors zusammenzuhalten.

3. Resolver nach einem der Ansprüche 1 oder 2, dadurch gekennzeichnet, dass der die Polflächen unterschtedlicher Polarität aufweisende, am Rotorumfang angeordnete Ring (25) aus magnetischem Material aus einer Vielzahl direkt nebeneinander angeordneter ringförmiger Elemente aus magnetischem Elektroblech bestehen und dass die innenliegenden schiefen Stirnflächen (34,35) der zylindrischen Haltekörper (26,27) quer zur Längsrichtung der Flächen mit Wellungen, vorzugsweise mit untereinander gleichen Abständen und gleicher Höhe, versehen sind und das Magnetringpaket (25) unter leichter Deformation des letzteren zwischen sich festhalten.

4. Verfahren zur Herstellung eines Resolvers nach einem der Ansprüche 1-3, dadurch gekenzeichnet, dass auf einen hülsenförmigen Rotorgrundkörper (24) zwei zylindrische Klemmkörper (26,27) aus nicht magnetischem Material aufgesetzt werden, deren sich gegenüberliegende innenliegende Stirnflächen (34,35) in jeweils gleichem schiefen Winkel zur Rotorachse verlaufend ausgebildet sind und parallel zueinander ausgerichtet einen Ring (25) aus einer Vielzahl von einzelnen Magnetringen zwischen sich einschliessen und dass die Klemmkörper (26,27) mit dem dazwischenliegenden Magnetringpaket (25) gegeneinandergepresst und in der Endlage am Rotorgrundkörper (24) fixiert werden.

5. Verfahren nach Anspruch 4, dadurch gekennzeichnet, dass die Klemmkörper und die Magnetringe mit einem Uebermass-Durchmesser aufgesetzt und nach deren Fixierung auf dem Rotorgrundkörper der so gebildete Rotoraussenmantel spanabhebend bearbeitet wird, bis der gewünschte Rotordurchmesser erzielt wird.

6. Verfahren nach einem der Ansprüche 4 oder 5, dadurch gekennzeichnet, dass den schiefen innenliegenden Anpressflächen (34,36) der Klemmkörper (26,27) eine gewellte Oberfläche verliehen wird, insbesondere durch Einfräsen von sich folgenden Wellungen.

## Claims

1. Resolver for measuring and detecting angular positions and revolutions of a shaft, using an induced magnetic field between a stator (29) and a rotor (28) which is connected or can be connected to the shaft and together form parts of the resolver, only the stator (29) being wound with a field winding and a measurement coil, the rotor (28) being provided or the circumference with pole surfaces of different polarity which interact with the stator windings, the pole surfaces being designed in such a manner that a magnetic flux distribution which is specific for this position exists in each angular position of the rotor (28), and the rotor (28) is constructed as a hollow-cylindrical base body made of non-magnetic material in whose outer casing there is provided a ring (25) which is circumferential parallel to a plane at an oblique angle to the rotor longitudinal axis, is made of magnetic material and has the pole surfaces of different polarity, characterized in that the hollow-cylindrical rotor base body (28) is composed of an inner cylindrical sleeve (24) on whose casing surface two cylindrical bodies (26, 27), which are made of non-magnetic material, are placed at a distance from one another and whose outer end surfaces run approximately flush with the end surfaces of the cylindrical sleeve (24), while the mutually opposite inner end surfaces (34, 35) run at an oblique angle parallel to the plane which is at an oblique angle with respect to the rotor longitudinal axis, and in doing so enclose between them and fix the ring (25) which is made of magnetic material.

2. Resolver according to Claim 1, characterized in that the inner cylindrical sleeve is flanged at the ends in order to hold the other parts of the rotor together in this way.

3. Resolver according to one of Claims 1 or 2, characterized in that the ring (25) which has the pole surfaces of different polarity, is arranged on the rotor circumference and is made of magnetic material, is composed of a multiplicity of annular elements which are arranged directly alongside one another and are made of electrical sheet metal, and in that the inner oblique end surfaces (34, 35) of the cylindrical holding body (26, 27) are provided transversely with respect to the longitudinal direction of the surfaces with corrugations, preferably at mutually identical intervals and with the same height and the magnet ring stack (25) is fixed in between with slight deformation of said stack.

4. Method for producing a resolver according to one of Claims 1-3, characterized in that two cylindrical clamping bodies (26, 27) which are made of non-magnetic material are placed onto a rotor base body (24) in the form of a sleeve, the opposite inner end surfaces (34, 36) of which cylindrical clamping bodies (26, 27) are designed such that they in each case run at the same oblique angle to the rotor axis and, aligned parallel to one another, enclose between them a ring (25) composed of a multiplicity of individual magnet rings, and in that the clamping bodies (26, 27) are pressed against one another with the magnet ring stack (25) located in between, and are fixed in the final position on the rotor base body (24).

5. Method according to Claim 4, characterized in that the clamping body and the magnet rings are fitted with an oversized diameter and, after being fixed on the rotor base body, the rotor outer casing formed in this way is machined in a cutting operation until the desired rotor diameter is achieved.

6. Method according to one of Claims 4 or 5, characterized in that the oblique inner contact-pressure surfaces (34, 36) of the clamping bodies (26, 27) are given a corrugated surface, in particular by milling mutually following corrugations.

## Revendications

1. Résolveur, pour la mesure, respectivement l'acquisition de positions angulaires, respectivement de rotations d'un arbre, faisant utilisation d'un champ magnétique induit entre un stator (29) et un rotor (28), relié ou susceptible d'être relié à l'arbre, constituant conjointement des parties du résolveur, où seul le stator (29) est bobiné avec un bobinage excitateur et une bobine de mesure, le rotor (28) étant pourvu sur la périphérie de surfaces polaires de polarités différentes, coopérant avec les bobinages de stator, les surfaces polaires étant réalisées de manière que, dans chaque position angulaire du rotor (28), soit constituée une distribution, spécifique pour cette position, du flux magnétique, et le rotor (28) étant réalisé sous forme de corps de base cylindrique creux, en un matériau non magnétique, dans l'enveloppe extérieure duquel est prévu un anneau (25) faisant le pourtour parallèlement à un plan placé obliquement par rapport à l'axe longitudinal du rotor, anneau réalisé en un matériau magnétique qui présente les surfaces polaires de polarités différentes, caractérisé en ce que le corps de base (28) du rotor cylindrique creux, est constitué d'une douille (24) cylindrique intérieure, sur la surface d'enveloppe de laquelle sont placés de façon espacée l'un de l'autre, deux corps cylindriques (26, 27) réalisés en un matériau non magnétique, corps dont les faces frontales extérieures sont à peu près affleurées avec les faces frontales de la douille (24) cylindrique, tandis que les faces frontales (34, 35) intérieures opposées courent suivant un angle oblique parallèlement au plan placé obliquement par rapport à l'axe longitudinal du rotor et enclosent entre elles et maintiennent fixé l'anneau (25) réalisé en matériau magnétique.

2. Résolveur selon la revendication 1, caractérisé en ce que la douille cylindrique intérieure est évasée sur les extrémités frontales, afin de maintenir assemblées les autres parties du rotor.

3. Résolveur selon l'une des revendications 1 ou 2, caractérisé en ce que l'anneau (25) réalisé en un matériau magnétique, disposé sur la périphérie du rotor, présentant les faces polaires de polarités différentes, est constitué d'une pluralité d'éléments annulaires disposés directement les uns à côtés des autres, fabriqués en une tôle électrique magnétique, et en ce que les faces frontales (34, 35) obliques intérieures des corps de maintien cylindriques (26, 27) sont pourvues d'ondulations orientées transversalement par rapport à la direction longitudinale des surfaces, ondulations ayant de préférence des espacements identiques et la même hauteur et permettant de fixer entre elles le paquet (25) d'anneaux magnétiques, ceci se faisant avec une légère déformation de celui-ci.

4. Procédé de fabrication d'un résolveur, selon l'une des revendications 1 à 3, caractérisé en ce que, sur un corps de base de rotor (24) en forme de douille, sont placés deux corps de serrage (26, 27) cylindriques, réalisés en un matériau non magnétique, dont les faces frontales intérieures opposées (34, 36) sont réalisées selon un angle d'égale obliquité par rapport à l'axe de rotor et enclosent entre elles, en étant orientées parallèlement les unes aux autres, un anneau (25) constitué d'une pluralité d'anneaux magnétiques individuels, et en ce que les corps de serrage (26, 27), avec le paquet d'anneaux magnétiques (25) placé en position intermédiaire, sont pressés l'un contre l'autre et sont fixés dans la position finale sur le corps de base de rotor (24).

5. Procédé selon la revendication 4, caractérisé en ce que les corps de serrage et les anneaux magnétiques sont appliqués avec un diamètre présentant un surdimensionnement et, après leur fixation sur le corps de base de rotor, l'enveloppe extérieure, ainsi constituée, du rotor est l'objet d'un usinage avec enlèvement de copeaux jusqu'à atteinte du diamètre de rotor souhaité.

6. Procédé selon l'une des revendications 4 ou 5, caractérisé en ce que l'on donne une surface ondulée aux surfaces de pressage (34, 36) intérieures obliques des corps de serrage (24, 26), en particulier par une fraisage des ondulations se suivant.
